## Europäisches Patentamt
## European Patent Office
## Office européen des brevets

(19)

(11) Veröffentlichungsnummer: **0 543 162 B1**

(12) **EUROPÄISCHE PATENTSCHRIFT**

(45) Veröffentlichungstag der Patentschrift: **19.07.95**

(51) Int. Cl.6: **B62D 49/02**, B62D 49/08

(21) Anmeldenummer: **92117966.9**

(22) Anmeldetag: **21.10.92**

(54) **Verfahren zum Regeln der Bewegung eines Hubwerkes.**

(30) Priorität: **21.11.91 DE 4138225**

(43) Veröffentlichungstag der Anmeldung:
**26.05.93 Patentblatt 93/21**

(45) Bekanntmachung des Hinweises auf die
Patenterteilung:
**19.07.95 Patentblatt 95/29**

(84) Benannte Vertragsstaaten:
**DE FR GB IT**

(56) Entgegenhaltungen:
**EP-A- 0 433 669**
**DE-A- 3 438 353**

(73) Patentinhaber: **ROBERT BOSCH GMBH**
**Postfach 30 02 20**
**D-70442 Stuttgart (DE)**

(72) Erfinder: **Schumacher, Werner, Dipl.-Ing.**
**Danziger Strasse 11**
**W-7144 Asperg (DE)**
Erfinder: **Maichle, Josef Dipl.-Ing.**
**Im Landgraben 3**
**W-7141 Beilstein (DE)**

Rank Xerox (UK) Business Services
(3.10/3.09/3.3.3)

## Beschreibung

Stand der Technik

Die Erfindung betrifft ein Verfahren zum Regeln der Bewegung eines Hubwerkes für beispielsweise ein über ein Dreipunktgestänge an einem Traktor angelenktes Anbaugerät mittels zumindest eines Regelventils zur Steuerung eines Druckmediums für das Hubwerk.

Bei einem Hubwerk, welches dem Anheben und Absenken beispielsweise einer Arbeitseinheit dient, werden häufig schnelle Reglerreaktionen erfordert, mit denen das Anheben bzw. Absenken gesteuert wird. Dies gilt in besonderem Maße für ein Hubwerk, mittels welchem ein Anbaugerät, wie beispielsweise ein Pfug, eine Egge oder ein ähnliches Arbeitsgeschirr an einem Traktor angehoben bzw. abgesenkt wird. Eine Betriebsart, welche insbesondere schnelle Reglerreaktionen erfordert, ist beispielsweise eine Schwingungstilgung bei normaler Fahrt des Traktors, bei der das Anbaugerät ganz erheblich mitschwingen kann und so das Fahrverhalten des Traktors negativ beeinflußt. Zu den Betriebsarten, die geregelt werden sollten, gehört aber auch das normale Absenken und Anheben, d.h., Druckregelung und Kraftregelung für das Anbaugerät.

In der DE-C-30 25 949 ist beispielsweise eine Steuereinrichtung beschrieben, mittels der eine lastunabhängige Senkstromregelung möglich ist. Dabei wird aber nicht gezeigt, wie die Steuerung einer derartigen Lastkompensation eines lastabhängigen Ventils möglich sein soll.

Die DE-A-37 23 488 betrifft dagegen ein System zur dynamischen Stabilisierung der Bewegung eines Fahrzeuges, insbesondere zur Stabilisierung von Nickschwingungen um eine im wesentlichen horizontalen Schwingungsachse. Dabei wird das als Tilgermasse dienende Anbaugerät so betätigt, daß dessen Bewegungsgröße der zugeordneten Bewegungsgröße des Fahrzeugs um mindestens nahezu 90° Phasenwinkel vorauseilt. Dieses Verfahren ist kompliziert und auch nicht den unterschiedlichen Verhältnissen von Fahrzeuganbaugeräten oder, bei Schwingungstilgung, den Verhältnissen einer Fahrbahn angepaßt. Ferner sind elektro-hydraulische Hubwerks-Regeleinrichtungen bekannt, mit denen die Stellung des Anbaugerätes gegenüber dem Traktor geregelt wird. Hierzu erfolgt die Hubwerksregelung mittels eines elektrisch angesteuerten Regelventils, welches hydraulisch vollständig lastunabhängig arbeitet. Das bedeutet, daß das Druckmedium für das Hubwerk immer dem elektrischen Ansteuerstrom proportional gehalten wird und zwar unabhänig von einem herrschenden Öldruck im Hubwerk. Sowohl das Anheben als auch das Absenken des Anbaugerätes erfolgt daher lastunabhängig.

In Zukunft soll jedoch aus Kostengründen ein Regelventil eingesetzt werden, welches beim Senken lastabhängig arbeitet. Bei konstantem elektrischem Ansteuerstrom, der auf den Senkenmagnet wirkt, ist dabei die Absenkgeschwindigkeit vom Öldruck und damit von dem Gewicht des Anbaugerätes abhängig.

Gewünscht ist jedoch ein lastunabhängiges Verhalten des Gesamtsystems. Dabei soll eine wirkungsvolle Lastunabhängigkeit auch für schnelle Regelvorgänge erzielt werden.

Bekannt ist ferner, daß eine elektrische Lastkompensation mittels geführter Sollwertrampen erzeugt werden kann. Auf eine sprungartige Änderung des Regelfehlers reagiert das Steuergerät mit zeitabhängigen Verstellrampen. Das Hubwerk folgt diesen vorgegebenen Sollwertrampen mit einem lastabhängigen Schleppfehler. Schnelle unverzögerte Hubwerksreaktionen sind so nicht machbar, wenn gleichzeitig die Lastunabhängigkeit gewährleistet werden soll.

Vorteile der vorliegenden Erfindung

Bei der vorliegenden Erfindung erfolgt die Steuerung des Regelventils zum Anheben des Hubwerkes lastunabhängig, zum Senken jedoch lastabhängig. Dabei wird über die Steuerung eine Lastkompensation durchgeführt und zwar erlernt die Steuerung eine Regelkreisverstärkung für das Senken des Hubwerkes bevorzugt adaptiv. D.h., die Steuerung paßt sich den tatsächlichen Gegebenheiten und Erfordernissen an. Mittels den adaptiv erlernten Verstärkungsfaktoren kann die Steuerung unverzögert reagieren, so daß eine schnelle Reglerreaktion erfolgt. Dies ist vor allem bei der Schwingungstilgung äußerst wichtig.

Der Öldruck bei Neutralstellung und beim Senkvorgang ist sehr stark vom Anbaugerät selbst abhängig. Das Anbaugerät ruht mit seinem Eigengewicht auf einer Ölsäule. Beim Senkvorgang wird lediglich Öl aus dem Hubzylinder in einen Tank abgelassen.

Die Last bzw. der Öldruck im Zylinder ist im Regelbetrieb zumindest in Neutralstellung und bei den Senkvorgängen weitgehend konstant. Dieser Umstand erleichtert eine adaptive Erlernung der richtigen Verstärkungsfaktoren zum Zwecke der Lastkompensation.

Erfindungsgemäß werden zwei Methoden zur Lastkompensation angeboten. Bei der ersten Methode wird über einen bestimmten Meßzeitraum hinweg die Zeitdauer ermittelt, in der das Hubwerk aktiv anhebt. Diese Zeitdauer wird mit der Zeitdauer verglichen, in der das Hubwerk aktiv absenkt. Dieses Verhältnis soll nahe bei 1 liegen, es kann auch kleiner als 1 sein.

Insbesondere zur Schwingungstilgung wird eine zweite Methode angewandt, welche bevorzugt aber nicht ausschließlich zweistufig ausgebildet ist. In einer ersten Stufe erfolgt ein Vergleich von tatsächlich ermittelten Werten mit denjenigen Werten für eine Lastkompensation, welche der Steuerung vorher eingegeben sind. Die tatsächlichen Werte werden durch entsprechende Kraftsensoren und Drucksensoren ermittelt. Anhand dieser Werte erfolgt eine Anpassung der Steuerung.

Verbessert wird diese Methode noch dadurch, daß die Zeitdauer ermittelt wird, wie lange das Hubwerk oberhalb und wie lange das Hubwerk unterhalb einer mittleren Aushubhöhe verweilt. Dies gilt vor allem für die Schwingungstilgung. Dabei sollen vor allem Werte innerhalb einer Bandbreite um die mittlere Aushubhöhe außer Betracht bleiben. Auch hier sollte das Verhältnis der Zeitdauer, in der das Hubwerk oberhalb der mittleren Aushubhöhe sich befindet, zu der Zeitdauer, in der sich das Hubwerk unterhalb der mittleren Aushubhöhe befindet, etwa 1 sein.

Anhand dieses Zeitdauer-Verhältnisses kann die Anpassung der Steuerung weiter verbessert werden, wobei diese Methode auch alleine ohne die erste Stufe angewendet werden kann.

Zeichnung

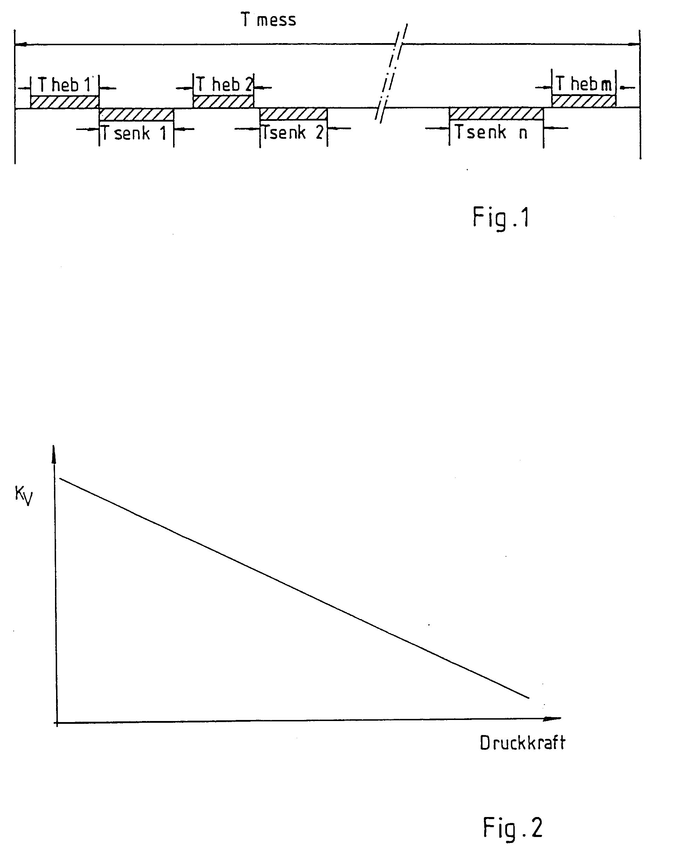

Die Erfindung wird anhand der Zeichnungen näher erläutert; dabei zeigt Figur 1 eine graphische Darstellung einer erfindungsgemäßen Methode zum adaptiven Anpassen der Steuerung eines Regelventils für ein Hubwerk;
Figur 2 ein Diagramm für eine weitere Methode zum adaptiven Anpassen der Steuerung eines Regelventils für ein Hubwerk;
Figur 3 eine graphische Darstellung einer verbesserten Methode entsprechend Figur 2.

Gemäß Figur 1 ist der Zeitraum T mess angegeben, in welchem ein Anheben und Absenken eines Anbaugerätes an einem Traktor ermittelt wird. Während dieser Zeitdauer T mess gibt es Zeiträume T heb, in denen das Hubwerk aktiv angehoben wird. Ferner gibt es Zeiträume T senk, in denen das Hubwerk aktiv abgesenkt wird. Aller Zeiträume werden nur bei fahrendem Traktor bzw. bei eingeschalteter Regelung gemessen. Dabei erfolgt eine Addition der einzelnen Zeiträume entsprechend:

$$T\ heb = T\ heb\ 1 + T\ heb\ 2 + ... + T\ heb\ n$$
$$T\ senk = T\ senk\ 1 + T\ senk\ 2 + ... + T\ senk\ n$$

Dabei ist die Einschaltdauer des elektrischen Ansteuerstromes an das Regelventil für Heben bzw. Senken der Parameter, anhand dessen die entsprechenden Zeiträume T heb bzw. T senk ermittelt werden. Das Zeitverhältnis von T heb zu T senk ist dann ein Maß für die Symmetrie eines Regelkreises.

Für die Regelung steht ein nicht näher gezeigtes Ventil zur Verfügung, das sich auf der HEBEN-Seite hydraulisch lastunabhängig verhält, während das hydraulische Verhalten auf der SENKEN-Seite lastabhänig ist. Bei Verwendung dieses Ventils ist das Verhältnis T heb zu T senk stark von der Last bzw. vom Öldruck abhängig. Je höher der Öldruck ist, um so mehr Öl fließt bei gleicher Ventilöffnung auf der SENKEN-Seite. Mit zunehmendem Öldruck wird die Stellzeit in Richtung SENKEN geringer. Das Verhältnis T heb zu T senk wird größer.

Eine bevorzugte Steuerung ist nun so ausgelegt, daß die Regelbewegungen symmetrisch sind. Das Verhältnis T heb zu T senk sollte daher 1 sein. Im Interesse geringerer Ölerwärmung kann dieses Verhältnis auch kleiner ausgelegt werden, was jedoch im folgenden unberücksichtigt bleibt.

Die Regelung der Steuerung erfolgt dementsprechend folgendermaßen:
In der Regelung wird eine elektrische Hebenverstärkung für die Steuerung fest eingestellt. Die elektrische Senkenverstärkung wird jedoch bei Regelbeginn zunächst lediglich voreingestellt. Die Steuerung mißt nun ständig das Verhältnis von T heb zu T senk. Wenn das Verhältnis zu hoch wird, muß die elektrische Senkenverstärkung zurückgenommen werden. Wenn das Verhältnis kleiner als 1 ist, muß die Senkenverstärkung angehoben werden. Die Verstellung der Senkenverstärkung erfolgt dabei integral. Ziel ist es, das Verhältnis T heb zu T senk 1 zu erreichen. Dieser Prozeß wirkt lastkompensierend. Die Steuerung erlernt adaptiv die jeweils beste Regelverstärkung für das Senken.

Alle erlernten Verstärkungsfaktoren können nichtflüchtig abgespeichert werden. Damit bleiben sie auch bei einem Abschalten des Traktors erhalten und stehen für einen weiteren Betrieb zur Verfügung.

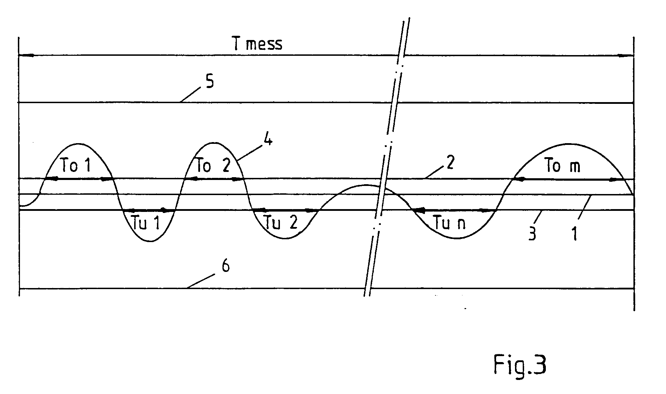

Für die Schwingungstilgung eignet sich allerdings die zweite Methode besser, welche anhand der Figuren 2 und 3 näher beschrieben wird. Die Stellbewegungen in dieser Betriebsart werden vorwiegend von einem Kraftregler bestimmt. Ferner findet ein unterlagerter Lageregler Anwendung, welcher das Hubwerk in seiner mittleren Aushubstellung "hält" bzw. dorthin zurückführt. Im Ruhezustand verweilt das Hubwerk in dieser "mittleren Aushubstellung".

Auch bei dieser Methode für die Schwingungtilgung kann das Hubwerk nach oben und nach unten ausgelenkt werden. Dabei sollte die Symmetrie der Stellvorgänge um die "mittlere Aushubhöhe" möglichst ideal sein. D.h., daß die Verweilzeiten des Hubwerkes oberhalb und unterhalb der "mittleren Aushubhöhe" möglichst gleich groß sein sollten.

Eine optimale Schwingungstilgungs-Funktion kann nur dann gelingen, wenn trotz vieler Stellbewegungen das Hubwerk im Mittel nicht an die vorgegebenen Stellbereichsgrenzen auswandert bzw. die Tendenz dazu aufweist. Dies kann nur dann gewahrleistet werden, wenn die Lastabhängigkeit des Ventils auf der SENKEN-Seite kompensiert wird. Hierfür sind zwei automatisch ablaufende Maßnahmen denkbar.

Grundsätzlich findet eine Schwingungstilgung nur bei ausgehobenem Anbaugerät statt. Zuerst wird bei Beginn einer Schwingungstilgungsfahrt (d.h., bei Einschalten der Regelart "Schwingungstilgung") geprüft, ob der voreingestellte Wert für die elektrische Senkenverstärkung mit einer im Steuergerät abgelegten Kurve übereinstimmt. In dieser Kurve ist das Verhältnis eines Voreinstellungswertes Kv für die elektrische Senkenverstärkung in Abhängigkeit eines gefilterten Kraftsensormeßwertes bzw. eines Drucksensormeßwertes aufgezeichnet. Mit dieser Kennlinie kann bei Schwingungstilgung vorab eine grobe Lastkompensierung erfolgen.

Ist keine Übereinstimmung der voreingestellten Werte mit dieser Kurve gegeben, so legt die Steuerung in Abhängigkeit des gefilterten Kraftsensorsignals oder des gefilterten Drucksensorsignals eine Voreinstellung für die Senkenverstärkung fest.

Die Kraftsensorsignale, die z.B. an den Unterlenkern des Dreipunktgestänges gemessen werden, sind proportional zum Gewicht des Anbaugerätes. Gleiches gilt auch bei Verwendung eines Drucksensorsignales.

Diese zweite Methode zur Lastkompensation bei Schwingungstilgung wird allerdings noch dadurch verbessert, daß die so gefundene Voreinstellung in Abhängigkeit von einer gemittelten Hubwerkslage korrigiert wird. Dies erfolgt folgendermaßen:

Mit T mess ist wiederum eine längere Zeitdauer gekennzeichnet, in der eine Überprüfung der Werte der Senkenverstärkung ermittelt wird. Mit der Bezugszahl 1 ist eine mittlere Aushubhöhe und mit den Bezugszahlen 2 und 3 eine Bandbreite um diese mittlere Aushubhöhe angedeutet. Diese Bandbreite wird von dem oben beschriebenen unterlagerten Lageregler bestimmt, so daß eine Messung der Zeiten T o, in denen sich das Anbaugerät oberhalb der mittleren Aushubhöhe befindet, bzw. der Zeiten T u, in denen sich das Anbaugerät unterhalb der mittleren Aushubhöhe befindet, nur außerhalb dieser Bandbreite erfolgt. Die Kurve 4 stellt im übrigen das Lagesensor-Signal dar. Innerhalb der Bandbreite 2/3 findet keine Messung statt.

Ferner ist es wichtig, daß innerhalb der Zeitdauer T mess eine Mindestanzahl an Stellbewegungen erfolgt, da sonst die Zeiträume T o und T u nicht weiter verwendet werden dürfen. Das Verhältnis T o zu T u ist nur dann repräsentativ, wenn der Meßzeitraum T mess ausreichend groß ist und wenn in diesem Meßzeitraum genügend Stellbewegungen stattgefunden haben.

T o und T u ergeben sich wiederum aus dem Summen der einzelnen Meßwerte T o 1 + T o 2 + T o 3 + ... + T o n und T u 1 + T u2 + T u 3 ... + T u m.

Ferner ist noch eine obere Stellgrenze 5 und eine untere Stellgrenze 6 angedeutet.

Die Steuerung verstellt den Korrekturwert zur Senkenverstärkung so, daß das Verhältnis T o zu T u möglichst 1 wird. Wenn also das Verhältnis T o zu T u größer 1 ist, muß der Korrekturwert ansteigen, damit die Senkenverstärkung höher wird und das Hubwerk in Zukunft länger unterhalb der "mittleren Aushubhöhe" verweilt.

Auch hier erfolgt die Verstellung des Korrekturanteils integral. Ebenfalls ist eine nicht flüchtige Abspeicherung vorgesehen.

Es soll jedoch ausdrücklich darauf hingewiesen werden, daß das Zeitdauer-Verhältnis nach Figur 3 auch alleine zu addaptiven Regleranpassung bei Schwingungstilgungsbetrieb herangezogen wird, d.h., ohne die in Figur 2 gezeigte Voreinstellung.

**Patentansprüche**

1. Verfahren zum Regeln der Bewegung eines Hubwerkes für beispielsweise ein über ein Dreipunktgestänge an einem Traktor angelenktes Anbaugerät mittels zumindest eines Regelventils zur Steuerung eines Druckmediums für das Hubwerk,
dadurch gekennzeichnet,
daß die Steuerung des Regelventils zum Anheben des Hubwerkes lastunabhängig, zum Senken jedoch lastabhängig erfolgt, wobei über die Steuerung eine Lastkompensation durchgeführt wird.

2. Verfahren nach Anspruch 1, dadurch gekennzeichnet, daß eine Regelkreisverstärkung für das Senken des Hubwerkes adaptiv von der Steuerung erlernt wird.

3. Verfahren nach Anspruch 1 oder 2, dadurch gekennzeichnet, daß über einen Meßzeitraum (T mess) hinweg die Zeitdauer (T heb), in der das Hubwerk aktiv anhebt, und die Zeitdauer (T senk), in der das Hubwerk aktiv absenkt, ermittelt wird.

4. Verfahren nach Anspruch 3, dadurch gekennzeichnet, daß das Regelventil von der Steuerung so betätigt wird, daß das Verhältnis der Zeitdauer (T heb) zur Zeitdauer (T senk) nahe bei 1 oder kleiner als 1 ist.

5. Verfahren nach Anspruch 1 oder 2, dadurch gekennzeichnet, daß insbesondere zur Schwingungstilgung in der Steuerung Werte für eine Lastkompensation beim Senken eingegeben und diese bei Beginn einer Schwingungstilgungsfahrt mit einer in der Steuerung vorhandenen Kurve verglichen werden, wobei bei Abweichungen dieser Werte von der Kurve eine Änderung der Voreinstellung in Abhängigkeit von gefilterten Kraftsensorsignalen oder Durcksensorsignalen erfolgt.

6. Verfahren nach Anspruch 5, dadurch gekennzeichnet, daß die Kraft- oder Drucksensorsignale an Unterlenkern des Dreipunktgestänges ermittelt und als proportional zum Gewicht des Anbaugerätes betrachtet werden.

7. Verfahren nach wenigstens einem der Ansprüche 1 bis 6, dadurch gekennzeichnet, daß über eine Zeitdauer (T mess) ermittelt wird, wie lange das Hubwerk oberhalb (T o) und wie lange das Hubwerk unterhalb (T u) einer mittleren Aushubhöhe verweilt.

8. Verfahren nach Anspruch 7, dadurch gekennzeichnet, daß die Messung nur außerhalb einer Bandbreite um die mittlere Aushubhöhe erfolgt.

9. Verfahren nach Anspruch 7 oder 8, dadurch gekennzeichnet, daß die Steuerung des Regelventils so erfolgt, daß das Verhältnis der Zeitdauer (T o), in der das Hubwerk sich oberhalb der mittleren Aushubhöhe befindet, zu der Zeitdauer (T u), in der sich das Hubwerk unterhalb der mittleren Aushubhöhe befindet, etwa 1 ist.

10. Verfahren nach wenigstens einem der Ansprüche 5 bis 9, dadurch gekennzeichnet, daß die so gefundenen Voreinstellungen der Steuerung des Regelventils in Abhängigkeit von einer gemittelten Hubwerkslage korrigiert wird.

**Claims**

1. Process for controlling the movement of a lifting device, for example for an agricultural implement coupled via a three point linkage to a tractor, by means of at least one control valve in order to control a pressure medium for the lifting device, characterized in that the control of the control valve is independent of load when raising the lifting device but dependent on load when lowering it, a load compensation being carried out by means of the control.

2. Process according to Claim 1, characterized in that a control circuit amplification for lowering the lifting device is learned adaptively from the control.

3. Process according to Claim 1 or 2, characterized in that the period (T heb) during which the lifting device actively raises and the period (T senk) in which the lifting device actively lowers, is determined over a measuring period (T mess).

4. Method according to Claim 3, characterized in that the control valve is activated by the control in such a way that the ratio of the period (T heb) to the period (T senk) is close to 1 or smaller than 1.

5. Process according to Claim 1 or 2, characterized in that, in particular for damping vibration in the control, values for a load compensation are entered during lowering and these values are compared at the start of a journey in vibration damping mode with a curve present in the control, a change in the presetting being carried out as a function of filtered force sensor signals or pressure sensor signals when these values deviate from the curve.

6. Process according to claim 5, characterized in that the force sensor signals or pressure sensor signals are determined at lower links of the three point linkage and are considered as proportional to the weight of the agricultural implement.

7. Process according to at least one of Claims 1 to 6, characterized in that it is determined over a period (T mess) how long the lifting device stays above (T o), and how long the lifting device stays below (T u), a central lifting height.

8. Process according to Claim 7, characterized in that the measurement only takes place outside a bandwidth around the central lifting height.

9. Process according to Claim 7 or 8, characterized in that the control of the control valve takes place in such a way that the ratio of the period (T o) in which the lifting device is located above the central lifting height to the period (T u) in which the lifting device is located below the central lifting height is approximately 1.

10. Process according to at least one of Claims 5 to 9, characterized in that the presettings of the control of the control valve which are found in this way are corrected as a function of an averaged lifting device position.

## Revendications

1. Procédé de régulation du mouvement d'un dispositif de levage, par exemple pour un appareil porté monté par l'intermédiaire d'un dispositif d'attelage en trois points sur un tracteur, à l'aide d'au moins une soupape de régulation pour commander un fluide sous pression alimentant le dispositif de levage, caractérisé en ce que la commande de la soupape de régulation pour lever le dispositif de levage se fait indépendamment de la charge, alors que la commande de l'abaissement se fait toutefois en fonction de la charge, une compensation de charge étant réalisée par la commande.

2. Procédé selon la revendication 1, caractérisé en ce que la commande apprend une amplification du circuit de réglage, de manière adaptative pour l'abaissement du dispositif de levage.

3. Procédé selon la revendication 1 ou 2, caractérisé en ce que, dans un intervalle de temps de mesure ($T_{mes}$), on détermine la durée ($T_{lev}$) au cours de laquelle le dispositif de levage se lève de manière active, et la durée ($T_{ab}$) au cours de laquelle le dispositif de levage s'abaisse de manière active.

4. Procédé selon la revendication 3, caractérisé en ce que la soupape de régulation est commandée par la commande pour que le rapport de la durée ($T_{lev}$) à la durée ($T_{ab}$) soit voisin de 1 ou inférieur à 1.

5. Procédé selon la revendication 1 ou 2, caractérisé en ce que, notamment pour éliminer les oscillations, la commande contient des valeurs de compensation de charge à l'abaissement et ces valeurs sont comparées, au début de la course de suppression des amortissements, à une courbe qui existe dans la commande, et en cas de différence entre ces valeurs et la courbe, il y a modification du préréglage en fonction du signal filtré du capteur de force ou des signaux du capteur de pression.

6. Procédé selon la revendication 5, caractérisé en ce que les signaux de capteurs de force ou de pression sont déterminés sur les bras inférieurs de l'attelage en trois points, et sont considérés proportionnellement au poids de l'appareil porté.

7. Procédé selon au moins l'une des revendications 1 à 6, caractérisé en ce que, sur une période de détection ($T_{mes}$) on détermine combien de temps le dispositif de levage à séjourné au-dessus ($T_o$) et au-dessous ($T_u$) d'une hauteur de déploiement moyenne.

8. Procédé selon la revendication 7, caractérisé en ce que la mesure ne se fait qu'à l'extérieur d'une largeur de bande autour de la hauteur de déploiement moyenne.

9. Procédé selon les revendications 7 ou 8, caractérisé en ce que la commande de la soupape de régulation se fait de manière que le rapport de la durée ($T_o$) pendant laquelle le dispositif de levage se trouve audessus de la hauteur de déploiement moyenne, à la durée ($T_u$) au cours de laquelle le dispositif de levage est au-dessous de la hauteur de déploiement moyenne, soit voisin de 1.

10. Procédé selon au moins l'une des revendications 5 à 9, caractérisé en ce que les préréglages ainsi trouvés pour la commande de la soupape de régulation, sont corrigés en fonction de la position moyenne du dispositif de levage.

Fig.1

Fig.2

Fig.3